# EUROPÄISCHE PATENTSCHRIFT

(11) **EP 1 074 180 B1**
(45) Veröffentlichungstag und Bekanntmachung des Hinweises auf die Patenterteilung: **11.02.2004**
(21) Anmeldenummer: 99115420.4
(22) Anmeldetag: 04.08.1999
(51) Int. Cl.: A22C 11/02

(54) **Vorrichtung und Verfahren zum Befüllen einer endlosen Verpackungshülle**
Method and apparatus for stuffing a continuos casing
Procédé et dispositif pour le remplissage d'une enveloppe continue

(43) Veröffentlichungstag der Anmeldung: 07.02.2001
(73) Patentinhaber: Tipper Tie technopack GmbH, D-21509 Glinde (DE)
(72) Erfinder: Plewa, Manfred, 27283 Verden (DE)
(74) Vertreter: Glawe, Delfs, Moll & Partner

(56) Entgegenhaltungen:
- WO-A-90/05455
- CH-A- 682 440
- DE-C- 4 412 697
- DE-C- 19 646 721
- GB-A- 2 050 801
- US-A- 5 046 219

## Beschreibung

Die Erfindung betrifft eine Vorrichtung und ein Verfahren zum Befüllen einer endlosen Verpackungshülle gemäß den Oberbegriffen der Ansprüche 1 bzw. 6, wie sie beispielsweise aus DE-C-4412697 bekannt sind.

Bei der Herstellung von Würsten im Strangverfahren wird Wurstbrät aus einem Füllrohr in eine Verpackungshülle (Schlauch oder Darm) gefüllt. Der gefüllte Schlauch wird in bestimmten Abständen eingeschnürt bzw. gerafft und mit Verschlußklammern versehen. In der Regel werden an einer Verschlußstelle zwei Klammern hintereinander angebracht, da auf das zu verschließende Ende einer vorlaufenden Wurst der ebenfalls zu verschließende Anfang einer nachlaufenden Wurst folgt.

Die Verpackungshülle wird in geraffter Form das Füllrohr umhüllend bereitgestellt und durch den Fülldruck des Wurstbräts von diesem Füllrohr abgezogen. Damit es zu der gewünschten prallen Füllung kommt, läßt sich die Hülle vom Füllrohr nur gegen den Widerstand einer sogenannten Darmbremse abziehen.

Verpackungshüllen können Schwachstellen aufweisen, die den einwandfreien Füll- und Verschließvorgang beeinträchtigen. Beispielsweise ist bei der Herstellung von Faserdärmen aus Zellulose erforderlich, in dem geschlossenen Schlauch nach jeweils etwa 80 bis 100 m eine Öffnung vorzusehen, damit das beim Aushärten des Darmmaterials entstehende Gas entweichen kann. Die Öffnungen werden nach dem Aushärten mit einem Gewebeklebeband verschlossen. Durch eine solche Schwachstelle kann es beim Füllvorgang zu Störungen kommen.

Der Erfindung liegt die Aufgabe zugrunde, eine Vorrichtung und ein Verfahren der eingangs genannten Art zu schaffen, die bzw. das ein rechtzeitiges Erkennen mit Schwachstellen versehener und damit möglicherweise schadhafter Verpackungshüllenabschnitte erlaubt.

Die Erfindung löst diese Aufgabe durch die kennzeichnenden Merkmale der Ansprüche 1 bzw. 6. Der Kern der Erfindung liegt darin, daß das Verpackungshüllenmaterial vor dessen Befüllung mit Hilfe einer Prüfeinrichtung kontinuierlich auf Schwachstellen geprüft wird.

Zunächst seien einige im Rahmen der Erfindung verwendete Begriffe erläutert. Eine Verpackungshülle ist endlos im Sinne der Erfindung, wenn sie vor dem Befüllen eine mehrfache Länge eines nach dem Befüllen und Verschließen abgeteilten Verpakkungshüllenabschnitts (einer fertigen Wurst) aufweist. Von einer solchen endlosen Hülle werden also im Zuge des Befüllvorgangs erforderliche Längenabschnitte abgeschnitten.

Eine Einrichtung zum Zuführen der Verpackungshülle zum Füllende des Füllrohres weist üblicherweise eine Halterung für einen Hüllenvorrat (eine Darmraupe) und eine Führung für die Zufuhr der Hülle zum Füllende auf. Das Abziehen der Hülle geschieht in der Regel durch den Fülldruck des Wurstbräts. In der Regel werden sowohl Halterung als auch Führung durch das Füllrohr gebildet, auf das die Darmraupe aufgestockt wird.

Schwachstellen des Verpackungshüllenmaterials sind alle Bereiche, die den störungsfreien Ablauf des Füll- und Verschließvorgangs behindern können. Es kann sich um Bereiche handeln, die gegenüber dem Normalzustand eine veringerte mechanische Festigkeit aufweisen, beispielsweise Schwächungen durch Materialfehler wie Risse oder dergleichen. Schwachstellen im Sinne der Erfindung sind jedoch auch Verdickungen der Hülle (beispielsweise durch das eingangs genannte Gewebeklebeband), die zwar eigentlich eine Verstärkung der Hülle sind, die jedoch dazu führen, daß die Hülle insbesondere beim Durchlaufen des engen Spalts der Darmbremse hängen bleibt und ein- oder abreißt. Schwachstellen sind somit insbesondere die eingangs geschilderten während des Herstellvorgangs entstandenen Öffnungen, die mit Gewebeklebeband verschlossen werden.

Die erfindungsgemäße Prüfeinrichtung arbeitet kontinuierlich. Dies bedeutet, daß die gesamte Länge der Verpackungshülle fortlaufend auf Schwachstellen geprüft wird. Die Prüfung kann sich dabei beschränken auf lediglich einen Umfangsabschnitt der Hülle oder des Schlauches, wenn zu erwarten ist, daß sich eine Schwachstelle auf dem gesamten Umfang der Verpackungshülle zeigt (beispielsweise durch das genannte Gewebeklebeband zum Verschluß der Gasöffnung). Im Rahmen der Erfindung ist es jedoch auch möglich, die Prüfeinrichtung so auszubilden, daß sie mehrere Umfangsabschnitte oder aber den gesamten Umfang der Hülle überwacht.

Erfindungsgemäß ist es möglich, Schwachstellen im Verpakkungshüllenmaterial zu erkennen, bevor der entsprechende Teil der Hülle befüllt wird. Sobald die Prüfeinrichtung einen entsprechenden Hüllenabschnitt erkennt, können entweder unten noch näher erläuterte Maßnahmen ergriffen werden, um einen störungsfreien ununterbrochenen weiteren Ablauf des Füllvorganges sicherzustellen, alternativ kann ein entsprechendes Signal der Prüfeinrichtung auch lediglich dazu verwendet werden, um die entsprechende Wurst mit dem geschwächten Hüllenabschnitt nach dem Befüllvorgang auszusortieren. Denkbar ist schließlich auch ein Stoppen des Füllvorgangs, damit von Hand Maßnahmen für einen weiteren störungsfreien Ablauf des Befüllens ergriffen werden können.

Als Prüfeinrichtung werden besonders bevorzugt ein oder mehrere optische Sensoren verwendet, die Schwachstellen anhand geänderter optischer Eigenschaften der Hülle erkennen können. Dabei können entweder Veränderungen der Translumineszenz der Hülle oder aber von deren Reflektionseigenschaften gemessen werden. Der optische Sensor kann mit Umgebungslicht als Lichtquelle arbeiten oder eine eigene Lichtquelle zum Aufbringen einer definierten elektromagnetischen Strahlung auf die Hülle bzw. durch diese hindurch arbeiten.

Bevorzugt ist eine Messung der Änderung der Reflektionseigenschaften durch Schwachstellen in der Hülle. Bei dem genannten Beispiel der durch Gewebeklebeband verschlossenen Darmöffnungen unterscheidet sich diese Klebeband farblich von dem Hüllenmaterial, so daß die entsprechende Schwachstelle durch Farbsensoren erfaßt werden kann.

Erfindungsgemäß können statt optischer Sensoren auch Meßeinrichtungen verwendet werden, die mit elektromagnetischer Strahlung anderer Frequenzen oder beispielsweise mit Ultraschall arbeiten. Eine weitere Alternative ist die Verwendung magnetischer Sensoren. Diese können insbesondere dann verwendet werden, wenn das genannte Gewebeklebeband mit einem magnetischen Kleber (beispielsweise versetzt mit para- oder ferromagnetischen Stoffen) versehen ist.

Erfindungsgemäß ist es bevorzugt, daß stromauf des Füllendes des Füllrohrs eine Prüfstrecke angeordnet ist, die das Hüllenmaterial entrafft durchläuft und auf der die erfindungsgemäße Prüfung stattfindet. Bei der Herstellung von Endlos-Wurstdärmen werden in der Regel etwa 35 m lange Darmabschnitte zu sogenannten Darmraupen gerafft. Eine solche Darmraupe wird üblicherweise auf das Füllrohr aufgestockt und durch den Fülldruck des Wurstbräts über das Füllende des Rohrs hinweg abgezogen. Um eine pralle Füllung der Wurst zu gewährleisten, ist im Bereich des Füllendes eine Darmbremse angeordnet, die dem Abziehvorgang des Darms in Füllrichtung (stromab) einen Widerstand entgegensetzt und somit eine Entraffung des Hüllenmaterials die gewünschte pralle Füllung sicherstellt.

Im Rahmen dieser bevorzugten Ausführungsform der Erfindung findet dieses Entraffen bereits vor der eigentlichen Darmbremse statt, so daß bereits entraffter Darm die Prüfstrecke durchläuft und die Prüfung auf Schwachstellen nicht durch die Materialraffung beeinträchtigt wird. Eine solche Entraffung kann beispielsweise durch einen stromauf von der Darmbremse angeordneten Ring oder eine entsprechende Gabel erfolgen, der bzw. die mit der Außenumfangsfläche des Füllrohres einen engen Spalt einschließt und somit eine Entraffung des abgezogenen Darmmaterials bewirkt.

Einige Schwachstellen wie beispielsweise die bereits genannten mit Gewebeklebeband verschlossenen Öffnungen beeinträchtigen die Festigkeit der Verpackungshülle so stark, daß während des Füllvorgangs an der entsprechenden Stelle ein vollständiger Abriß droht. Ein solcher Abriß kann insbesondere beim Durchtritt der entsprechenden Schwachstelle durch die Darmbremse hindurch oder aber später durch den auf die Schwachstelle wirkenden Fülldruck des Wurstbräts eintreten.

Gemäß einer besonders bevorzugten Ausführungsform der Erfindung ist es daher vorgesehen, daß die Prüfeinrichtung beim Erkennen einer Schwachstelle den Füllvorgang des entsprechenden Verpackungshüllenabschnitts so beeinflußt, daß ein Abreißen nicht auftreten kann. Zu diesem Zweck wird die Darmspannung desjenigen gefüllten Verpackungshüllenabschnitts (der Wurst), der die Schwachstelle enthält, deutlich vermindert. Dies geschieht vorzugsweise durch ein kurzzeitiges Lösen oder Lockern der Darmbremse für eine solche Zeitspanne, daß die von der Prüfeinrichtung erkannte Schwachstelle die Darmbremse mit deutlich vermindertet Reibung oder ungehindert passieren kann. Beim Durchtritt durch die Darmbremse kann die Verpakkungshülle an der Schwachstelle daher nicht reißen. Auch beim anschließenden Füllen des entsprechenden Verpackungshüllenabschnittes ist die Reißgefahr ausgeschlossen oder doch zumindest deutlich vermindert, da aufgrund der kurzzeitig gelokkerten oder gelösten Darmbremse durch den Fülldruck mehr Darmmaterial abgezogen wird, als dies üblicherweise gegen den Widerstand der Darmbremse geschieht. Dementsprechend wird der entsprechende Abschnitt vergleichsweise locker gefüllt, so daß die Gefahr des Reißens durch den Fülldruck nicht besteht. Dieser locker gefüllte Abschnitt muß in der Regel als Ausschuß aussortiert werden.

Erfindungsgemäß ist dementsprechend vorgesehen, daß die Prüfeinrichtung und ein Stellorgan für die Darmbremse in einem Regelkreis verknüpft werden. Sobald die Prüfeinrichtung eine Schwachstelle erkennt, steuert sie das Stellorgan der Darmbremse in einer Weise und für einen Zeitabschnitt an, daß die Schwachstelle die Darmbremse ungehindert oder zumindest unter verringertem Widerstand passieren kann.

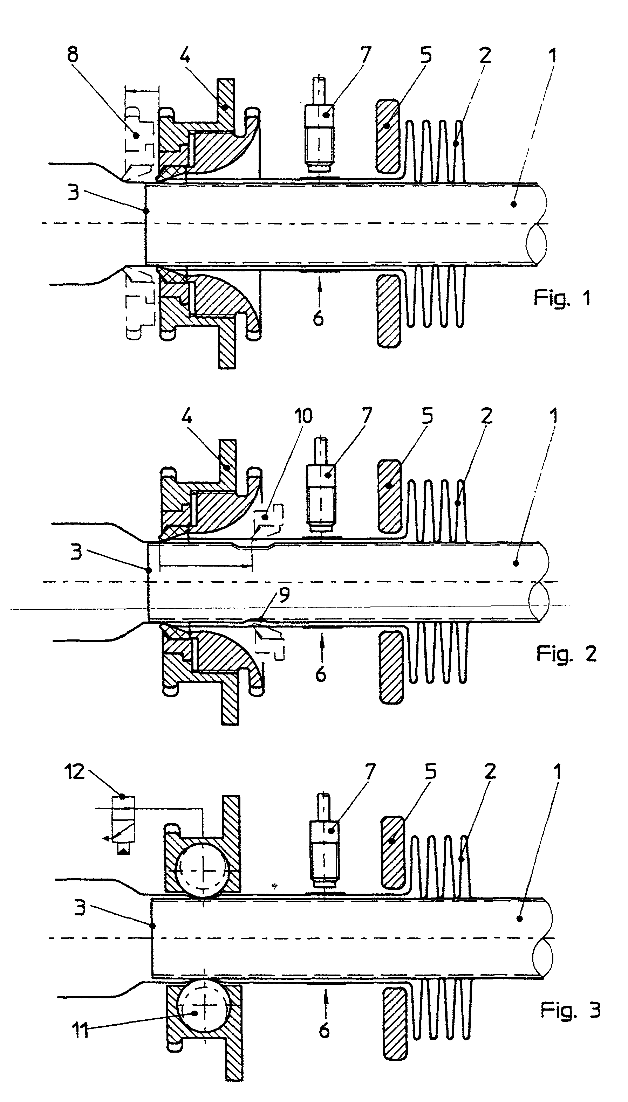

Drei Ausführungsformen der Erfindung werden im folgenden anhand der Zeichnung beschrieben. Die Fig. 1 bis 3 zeigen schematisch drei verschiedene Ausführungsformen einer erfindungsgemäßen Vorrichtung.

Auf einem Füllrohr 1 ist eine Darmraupe 2 aufgestockt. Es handelt sich hier um einen als Wursthülle vorgesehenen Schlauch aus Darm, Kunstfasermaterial oder dergleichen. Wie bereits erwähnt, muß bei der Herstellung eines Darms aus Zellulosefaser etwa alle 80 bis 100 m eine Öffnung zum Entweichen des beim Härten verwendeten oder entstehenden Gases vorgesehen sein, die anschließend mit Gewebeklebeband verschlossen wird. Bei üblichen Darmraupen weist der Darm (im gestreckten Zustand) eine Länge von etwa 35 m auf, somit ist bei etwa jeder dritten Raupe mit einer durch Klebeband verschlossenen Schwachstelle zu rechnen.

Durch das Füllrohr 1 wird Wurstbrät hindurchgepreßt und tritt aus dem Füllende 3 in den Darm 2 aus. Durch den Fülldruck wird der Darm 2 gegen den Widerstand einer Darmbremse 4 vom Füllrohr 1 abgezogen. Sobald ein gefüllter Wurstabschnitt einer gewünschten Länge entstanden ist, wird dieser durch eine im Stand der Technik bekannte und in der Zeichnung nicht dargestellte Vorrichtung eingeschnürt und mit Verschlußklammern versehen, so daß eine fertige Wurst entsteht.

Ein das Füllrohr 1 umschließender Ring 5 sorgt dafür, daß die Darmraupe beim Durchtritt durch den Spalt zwischen dem Außenumfang des Füllrohres 1 und dem Ring 5 hindurch entrafft wird. Der Darm durchläuft anschließend eine zwischen diesem Ring 5 und der Darmbremse 4 angeordnete Prüfstrecke 6. Ein Farbsensor 7 überwacht die Reflektionseigenschaften der Darmhülle und stellt auf eine Schwachstelle hinweisende Abweichungen wie die genannten durch Gewebeklebeband verschlossenen Öffnungen fest. Stellt der Farbsensor 7 eine solche Abweichung fest, wird mittels eines in der Zeichnung nicht dargestellten Stellorgans die Darmbremse 4 in Axialrichtung des Füllrohres 1 stromab um eine solche Strecke verschoben, daß keine Reibung des Darms 2 zwischen dem Außenumfang des Rohres 1 und der Bremse auftritt. Die entsprechende Verschiebung ist in Fig. 1 bei 8 angedeutet. Dieses Lösen der Darmbremse 4 erfolgt für einen Zeitraum, der ausreichend lang ist, daß die Schwachstelle durch die Bremse 4 hindurchtritt und damit das Füllrohrende 3 passiert hat. Die diesen mit einer Schwachstelle versehenen Abschnitt aufweisende Wurst hat aufgrund des zeitweise ungehinderten Darmabzugs einen verminderten Fülldruck und ist damit Ausschuß. Jedoch kann der automatische Füllvorgang ungehindert und ohne Unterbrechung weiterlaufen, lediglich die entsprechende Wurst muß aussortiert werden.

Fig. 2 zeigt eine weitere Ausführungsform der Erfindung. Der einzige Unterschied gegenüber der Ausführungsform gemäß Fig. 1 besteht darin, daß hier die Darmbremse zwecks Lockerung in Axialrichtung des Füllrohrs 1 stromauf verschoben wird, bis sie in eine Einschnürung 9 des Füllrohres greift und dadurch den Darmzug soweit reduziert, daß kein Abriß an der Klebestelle stattfinden kann. Die entsprechend zurückgezogene Position der Darmbremse 4 ist bei 10 angedeutet.

Bei der Ausführungsform der Fig. 3 weist die Darmbremse eine Blähdichtung 11 auf, die einen pneumatisch erzeugten Druck auf die Verpackungshülle 2 und das Füllrohr 1 ausübt. Wenn der Farbsensor 7 eine Schwachstelle erkennt, steuert er das Steuerventil 12 für die Blähdichtung 11 so an, daß sich der Druck der Blähdichtung 11 vermindert und ein ungehindertes oder nahezu ungehindertes Passieren der Schwachstelle durch die Darmbremse hindurch möglich ist.

## Patentansprüche

1. Vorrichtung zum Befüllen einer endlosen Verpackungshülle (2), mit einem Füllrohr (1) und einer Einrichtung zum Zuführen der Verpackungshülle (2) zum Füllende (3) des Füllrohres (1), **dadurch gekennzeichnet, daß** die Vorrichtung eine Prüfeinrichtung (7) zum Prüfen des Verpackungshüllenmaterials (2) auf Schwachstellen aufweist, die zur kontinuierlichen Prüfung der Hülle (2) vor deren Zufuhr zum Füllende (3) ausgebildet ist.

2. Vorrichtung nach Anspruch 1, **dadurch gekennzeichnet, daß** die Prüfeinrichtung wenigstens einen optischen Sensor (7) aufweist.

3. Vorrichtung nach Anspruch 1 oder 2, **dadurch gekennzeichnet, daß** sie stromauf von dem Füllende (3) eine Prüfstrecke (6) aufweist, die das Verpackungshüllenmaterial (2) entrafft durchläuft.

4. Vorrichtung nach Anspruch 3, **dadurch gekennzeichnet, daß** sich die Prüfstrecke (6) auf dem Füllrohr (1) zwischen der füllendeseitigen Darmbremse (4,11) und einer beabstandet davon angeordneten Entraffeinrichtung (5) befindet.

5. Vorrichtung nach einem der Ansprüche 1 bis 4, **dadurch gekennzeichnet, daß** sie eine Einrichtung zum kurzzeitigen Lockern oder Öffnen der Darmbremse (4,11) aufweist, wobei diese Einrichtung von der Prüfeinrichtung (7) angesteuert wird.

6. Verfahren zum Befüllen einer endlosen Verpackungshülle (2) aus einem Füllrohr (1), **dadurch gekennzeichnet, daß** die zu befüllende Verpackungshülle (2) vor der Zufuhr zu dem Füllende (3) des Füllrohrs (1) kontinuierlich auf Schwachstellen geprüft wird.

7. Verfahren nach Anspruch 6, **dadurch gekennzeichnet, daß** die Prüfung durch Messen optischer Eigenschaften des Verpackungshüllenmaterials (2) erfolgt.

8. Verfahren nach Anspruch 7, **dadurch gekennzeichnet, daß** die Prüfung auf einer stromauf von dem Füllende angeordneten Prüfstrecke (6) erfolgt, die das Verpackungshüllenmaterial (2) entrafft durchläuft.

9. Verfahren nach einem der Ansprüche 6 bis 8, **dadurch gekennzeichnet, daß** beim Feststellen einer Schwachstelle durch die Prüfeinrichtung (7) die im Bereich des Füllendes (3) angeordnete Darmbremse (4,11) für eine solche Zeitspanne gelockert oder geöffnet wird, daß diese Schwachstelle die Darmbremse (4,11) passieren kann.

## Claims

1. Apparatus for filling an endless packaging casing (2), having a filling pipe (1) and a device for feeding the packaging casing (2) to the filling end (3) of the filling pipe (1), **characterized in that** the apparatus has a testing device (7) for testing the packaging casing material (2) for points of weakness, the said testing device being designed for continuous testing of the casing (2) before it is fed to the filling end (3).

2. Apparatus according to Claim 1, **characterized in that** the testing device has at least one optical sensor (7).

3. Apparatus according to Claim 1 or 2, **characterized in that** it has, upstream of the filling end (3), a testing section (6) which runs deshirred through the packaging casing material (2).

4. Apparatus according to Claim 3, **characterized in that** the testing section (6) is situated on the filling pipe (1) between the casing brake (4, 11) at the filling end and a deshirring device (5) arranged spaced apart therefrom.

5. Apparatus according to one of Claims 1 to 4, **characterized in that** it has a device for briefly loosening or opening the casing brake (4, 11), this device being activated by the testing device (7).

6. Method for filling an endless packaging casing (2) from a filling pipe (1), **characterized in that** the packaging casing (2) which is to be filled is tested continuously for points of weakness before being fed to the filling end (3) of the filling pipe (1).

7. Method according to Claim 6, **characterized in that** the testing takes place by measuring optical properties of the packaging casing material (2).

8. Method according to Claim 7, **characterized in that** the testing takes place on a testing section (6) which is arranged upstream of the filling end and runs deshirred through the packaging casing material (2).

9. Method according to one of Claims 6 to 8, **characterized in that** when the testing device (7) defines a point of weakness, the casing brake (4, 11), which is arranged in the region of the filling end (3), is loosened or opened for a period of time which enables this point of weakness to pass through the casing brake (4, 11).

## Revendications

1. Dispositif de remplissage d'une enveloppe d'emballage (2) sans fin, comportant un tube de remplissage (1) et un dispositif pour amener l'enveloppe d'emballage (2) à l'extrémité de remplissage (3) du tube de remplissage (1), **caractérisé en ce que** le dispositif comporte un dispositif de contrôle (7) pour contrôler les points faibles du matériau de l'enveloppe d'emballage (2), lequel dispositif est conçu pour le contrôle continu de l'enveloppe (2) avant son amenée à l'extrémité de remplissage (3).

2. Dispositif selon la revendication 1, **caractérisé en ce que** le dispositif de contrôle comporte au moins un capteur optique (7).

3. Dispositif selon la revendication 1 ou 2, **caractérisé en ce qu'**il présente en amont de l'extrémité de remplissage (3) un parcours de contrôle (6) qui traverse le matériau de l'enveloppe d'emballage (2) déployée.

4. Dispositif selon la revendication 3, **caractérisé en ce que** le parcours de contrôle (6) se trouve sur le tube de remplissage (1) entre le frein de boyau (4, 11) contre extrémité de remplissage et un dispositif de déploiement (5) disposé à distance de celui-ci.

5. Dispositif selon l'une des revendications 1 à 4, **caractérisé en ce qu'**il comporte un dispositif pour desserrer ou ouvrir brièvement le frein de boyau (4, 11), ce dispositif étant commandé par le dispositif de contrôle (7).

6. Procédé de remplissage d'une enveloppe d'emballage (2) sans fin, à partir d'un tube de remplissage (1), **caractérisé en ce que** des points faibles de l'enveloppe d'emballage (2) à remplir sont contrôlés en continu avant l'amenée à l'extrémité de remplissage (3) du tube de remplissage (1).

7. Procédé selon la revendication 6, **caractérisé en ce que** le contrôle s'effectue par mesure de propriétés optiques du matériau de l'enveloppe d'emballage (2).

8. Procédé selon la revendication 7, **caractérisé en ce que** le contrôle s'effectue sur un parcours de contrôle (6) disposé en amont de l'extrémité de remplissage, lequel parcours traverse le matériau de l'enveloppe d'emballage (2) déployé.

9. Procédé selon l'une des revendications 6 à 8, **caractérisé en ce que** dans le cas où le dispositif de contrôle (7) constate un point faible, le frein de boyau (4, 11), disposé dans la zone de l'extrémité de remplissage (3), est desserré ou ouvert pendant un laps de temps suffisant pour que ce point faible puisse passer à travers le frein de boyau (4, 11).
